Europäisches Patentamt

European Patent Office

Office européen des brevets

(11) Veröffentlichungsnummer: **0 190 447**
**A2**

(12) **EUROPÄISCHE PATENTANMELDUNG**

(21) Anmeldenummer: 85115951.7

(22) Anmeldetag: 13.12.85

(51) Int. Cl.⁴: **G 01 D 13/02**

(30) Priorität: 31.01.85 DE 3503196

(43) Veröffentlichungstag der Anmeldung:
13.08.86 Patentblatt 86/33

(84) Benannte Vertragsstaaten:
AT BE CH FR GB IT LI NL SE

(71) Anmelder: Göhringer, Friedrich
Gerwigstrasse 20/41
D-7740 Triberg(DE)

(72) Erfinder: Göhringer, Friedrich
Gerwigstrasse 20/41
D-7740 Triberg(DE)

(74) Vertreter: Patentanwälte Dipl.-Ing. Klaus Westphal Dr.
rer. nat. Bernd Mussgnug Dr. rer.nat. Otto Buchner
Waldstrasse 33
D-7730 VS-Villingen(DE)

(54) Anzeigevorrichtung für ein Messgerät.

(57) Bei einer Anzeigevorrichtung für ein Meßgerät wird entsprechend dem Meßwert ein Skalenband aus unterschiedlich gefärbten, in Bewegungsrichtung aneinander anschließenden, lichtdurchlässigen Farbfeldern an einer Lichtquelle vorbeibewegt. Das die Farbfelder durchstrahlende Licht der Lichtquelle wird von einem Feld von Lichtleitern aufgenommen. Die Lichtaustrittsflächen dieser Lichtleiter sind in einem Anzeigefeld angeordnet. Die Farbe der Lichtpunkte des Anzeigefelds und deren schrittweise Farbänderung geben den Meßwert und die Tendenz der Meßwertänderung an.

Fig.1

EP 0 190 447 A2

Croydon Printing Company Ltd.

Dipl. Ing. Klaus Westphal
Dr. rer. nat. Bernd Mussgnug

Dr. rer. nat. Otto Buchner
PATENTANWÄLTE
European Patent Attorneys

Waldstrasse 33

D-7730 VS-VILLINGEN

Flossmannstrasse 30a

D-8000 MUNCHEN 60

Telefon 07721-56007
Telegr. Westbuch Villingen
Telex 17721-217 wemu d
Telefax 7721217 wemu d

Telefon 089-832446
Telegr Westbuch Munchen
Telex 5213177 webu d
Telecop 089-8344618
(CCITT 3) attention webu

1065.9 EP

Friedrich Göhringer
Gerwigstrasse 20/41
7740  Triberg


Anzeigevorrichtung für ein Meßgerät


Die  Erfindung  betrifft  eine  Anzeigevorrichtung  für  ein
Meßgerät,  das  die  Meßgröße  in  den  Weg  eines  bewegten  Bandes  umwandelt,  gemäß  dem  Oberbegriff  des  Anspruches  1.

Eine  große  Zahl  von  Meßgeräten  wandelt  die  Meßgröße  zum
Zwecke  der  Anzeige  in  eine  mechanische  Bewegung  um.  Solche
Meßgeräte  sind  beispielsweise  Spannungs-  und  Strommeßgeräte,  Thermometer,  Barometer,  Hgrometer  usw.

In  den  häufigsten  Fällen  wird  die  Meßgröße  in  die  Bewegung
eines  Zeigers  umgewandelt,  der  sich  über  eine  feststehende
Skala  hinwegbewegt.  Da  die  gesamte  Skala  sichtbar  sein
muß,  benötigt  die  Anzeige  viel  Platz.

Es sind auch Anzeigevorrichtungen bekannt, bei welchen die Meßgröße in die Bewegung eines Skalenbandes umgewandelt wird, das zur Ablesung an einem Fenster mit einer Ablesemarke vorbeigeführt wird.

In beiden Fällen erfolgt die Ablesung mittels des Zeigers bzw. der Ablesemarkierung an einer Strichskala. Die Ablesung der Anzeigevorrichtung erfordert daher ein genaues Hinsehen und ist nicht aus größerer Entfernung möglich. Änderungen der angezeigten Meßgröße sind nur mühsam feststellbar, da dazu zwei genaue Ablesungen in einem zeitlichen Abstand und das Festhalten des zuerst abgelesenen Wertes notwendig sind.

Es ist weiter bekannt, bei Anzeigevorrichtungen der genannten Art bestimmte Skalenbereiche unterschiedlich zu färben, um z.B. zulässige Sollwerte der Meßgröße gegenüber unzulässigen Abweichungen abzugrenzen. Durch die unterschiedliche Färbung werden zwar gewisse Skalenbereiche voneinander unterschieden, die oben genannten Nachteile der Ablesung werden dadurch aber nicht beseitigt.

Bei einer aus der DE-OS 2 134 186 bekannten Anzeigevorrichtung der eingangs genannten Gattung sind am Umfang einer Trägerscheibe konzentrische Spuren von einander abwechselnden lichtdurchlässigen und lichtundurchlässigen Feldern angeordnet, die die Winkelposition der Trägerscheibe darstellende Codespuren bilden. Die Codespuren werden von einer Lichtquelle durchstrahlt. Zur Abtastung ist jeder Codespur die Lichteintrittsfläche eines Lichtleiters zugeordnet, so daß die Lichteintrittsflächen der Lichtleiter in gleicher Winkelstellung radial nebeneinander angeordnet sind. Die Lichtleiter sind zu einem Anzeigefeld geführt, wo sie zu einer Segmentanzeige des digital codierten abgetasteten Winkelwertes angeordnet sind. Die lichtdurchlässigen Felder der Codespuren können in gewissen Winkelbereichen unterschiedlich gefärbt sein, so daß die digital angezeigten Meßwerte auf dem Anzeigefeld in gewissen Meßbereichen in unterschiedlichen Farben aufleuchten.

Die Anzeigevorrichtung ist äußerst aufwendig, einerseits wegen der erforderlichen Codierung der Meßwerte auf der Trägerscheibe und andererseits wegen der großen Zahl von Lichtleitern, die erforderlich sind, um die digital codierten Meßwerte in die Segmentanzeige umzuwandeln und der Anzeige eine ausreichende Leuchtstärke zu geben. Die Anzeigevorrichtung zeigt den jeweiligen momentanen Meßwert mit der der Winkelcodierung der Trägerscheibe entsprechenden Genauigkeit an. Die Anzeige läßt jedoch keine Tendenz der Meßwertänderung erkennen.

Aus der US-PS 4 096 383 ist es bekannt, eine rotierende Scheibe mit in Umfangsrichtung beabstandeten Durchbrüchen zu versehen und diese Durchbrüche fotoelektrisch abzutasten. Die Durchbrüche lösen jeweils nur ein fotoelektrisches Signal aus, das zur Zählung über einen Lichtleiter abgeführt wird. Eine Anzeige der momentanen Meßgröße, d.h. der momentanen Stellung der rotierenden Scheibe, ist nicht möglich.

Der Erfindung liegt die Aufgabe zugrunde, eine einfach aufgebaute und in der Herstellung preisgünstige Anzeigevorrichtung für ein Meßgerät zu schaffen, das bei leichter Ablesbarkeit auch aus größerer Entfernung Meßwertänderungen einfach erkennen läßt.

Diese Aufgabe wird bei einer Anzeigevorrichtung der eingangs genannten Gattung erfindungsgemäß gelöst durch die Merkmale des kennzeichnenden Teils des Anspruches 1.

Vorteilhafte Ausführungsformen der Erfindung sind in den Unteransprüchen angegeben.

Die erfindungsgemäße Anzeigevorrichtung geht von dem Prinzip des an einem Fenster vorbeibewegten Skalenbandes aus. Es wird jedoch keine Strichskala vewendet, die an einer Ablesemarke vorbeibewegt wird. Das Skalenband besteht vielmehr aus einer in Bewegungsrichtung aneinander anschließenden Folge von unterschiedlich gefärbten Farbfeldern. Die einzelnen Farbfelder sind den verschiedenen Meßwerten zugeordnet.

Das Vorbeibewegen eines aus unterschiedlich gefärbten Farbfeldern bestehenden Skalenbandes an einem Fenster würde an sich bereits gegenüber einer Strichskala ein leichteres Ablesen aus größerer Entfernung ermöglichen. Die Genauigkeit der Ablesung wäre jedoch gering. Bei einer Änderung des Meßwertes wandert nämlich das eine Farbfeld aus dem Fenster, während sich das nachfolgende unterschiedlich gefärbte Farbfeld in das Fenster schiebt. Der Übergang von einem Farbfeld zu dem nächsten ist aus größerer Entfernung nicht ohne weiteres erkennbar, insbesondere weil sich bei einer feineren Skalenunterteilung die Farbe von einem Farbfeld zum nächsten nur schrittweise ändert. Insbesondere schiebt sich das folgende Farbfeld in einer kontinuierlichen Bewegung in das Fenster, so daß die Verschiebung optisch nur schwer wahrgenommen werden kann. Insbesondere ist eine geringfügige Änderung des Meßwertes bei in zeitlichem Abstand aufeinanderfolgenden Ablesungen schwer feststellbar.

Um diese Nachteile zu vermeiden, ist bei der erfindungsgemäßen Anzeigevorrichtung anstelle eines Ablesefensters ein Feld von Lichtleitern vorgesehen, das das von der Lichtquelle durchstrahlte aus einzelnen Farbfeldern bestehende Skalenband abtastet. Die eigentliche Anzeige erfolgt durch die in einem entsprechenden Feld angeordneten Lichtaustrittsflächen der Lichtleiter.

Die Abtastung der Farbfelder des Skalenbandes mittels eines Feldes von Lichtleitern wandelt die kontinuierliche Verschiebung der Grenzlinie zwischen zwei Farbfeldern des Skalenbandes bei einer Änderung des Meßwertes in einen sprunghaften Farbumschlag eines oder mehrerer Lichtleiter um, wenn sich die Grenzlinie zwischen zwei Farbfeldern über die Lichteintrittsfläche dieses Lichtleiters bzw. dieser Lichtleiter hinwegbewegt. Die Bewegung des Skalenbandes bei einer Änderung des Meßwertes ist auf diese Weise sofort und leicht dadurch erkennbar, daß die Lichtaustrittsflächen der Lichtleiter im Anzeigefeld aufeinanderfolgend sprunghaft in der Farbe umschlagen.

Die Lichtaustrittsflächen der Lichtleiter können in dem Anzeigefeld einen wesentlich größeren gegenseitigen Abstand aufweisen als die Lichteintrittsflächen bei der Abtastung des Skalenbandes. Das Skalenband kann daher klein ausgebildet sein, was wesentlich ist, da seine Masse durch das Meßgerät bewegt werden muß. Dennoch können die Lichtaustrittsflächen in dem Anzeigefeld einen großen gegenseitigen Abstand aufweisen, so daß sich eine leichte Ablesbarkeit auch aus großer Entfernung ergibt.

Die durch die Lichtaustrittsflächen der Lichtleiter in dem Anzeigefeld gebildeten Lichtpunkte weisen eine hohe Leuchtstärke auf, so daß diese Lichtpunkte und ihre Farbe auch aus größerer Entfernung und insbesondere auch bei Dunkelheit gut erkennbar sind. Um die Lichtintensität der Lichtquelle optimal auszunützen, ist es zweckmäßig, die Lichteintrittsflächen der Lichtleiter bei der Abtastung des Skalenbandes in dichtester Packung anzuordnen. Um die Lichtintensität der einzelnen Lichtpunkte des Anzeigefeldes zu erhöhen, können auch Lichtleiter verwendet werden, deren Faser-Querschnitt sich verringert, so daß die von den Lichteintrittsflächen aufgenommene Lichtintensität auf kleinere Lichtaustrittsflächen gebündelt wird und sich die Leuchtdichte erhöht.

Die Lichteintrittsenden der Lichtleiter sind vorzugsweise auf die Lichtquelle gerichtet. Es kann somit eine punktförmige Lichtquelle, z.B. ein unmittelbar an dem Skalenband angeordnetes Glühlämpchen verwendet werden, ohne daß zusätzlich optische Maßnahmen wie z.B. Linsen oder dgl. erforderlich sind. Dadurch ergibt sich ein preisgünstiger Aufbau der Anzeigevorrichtung.

Zweckmäßigerweise sind die Lichteintrittsenden der Lichtleiter in einer gemeinsamen Halterung befestigt. Diese Halterung ist in der Bewegungsrichtung des Skalenbandes verschiebbar. Dadurch kann die Anzeigevorrichtung in der Weise justiert werden, daß einem bestimmten Meßwert eine vorgegebene Farbe des Skalenbandes exakt zugeordnet wird.

Die Zahl und die Anordnung der Lichtleiter kann je nach dem Anwendungszweck sehr unterschiedlich gewählt werden. Zweckmäßigerweise sollten mindestens drei Lichtleiter mit ihren Lichteintrittsflächen in der Bewegungsrichtung des Skalenbandes nebeneinander angeordnet sein. Dadurch ist eine für die meisten Fälle ausreichende Genauigkeit der Ablesung gegeben, wobei auch noch Tendenzen der Änderung des Meßwertes erkennbar sind. Eine größere Anzahl von Lichtleitern, die mit ihren Lichteintrittsflächen in der Bewegungsrichtung des Skalenbandes nebeneinander angeordnet sind, ermöglicht eine höhere Ablesegenauigkeit. Die notwendigerweise kleineren Lichteintrittsflächen führen jedoch zu einer geringeren Lichtintensität der Anzeige. Da Ziel der erfindungsgemäßen Anzeigevorrichtung in erster Linie eine übersichtliche und leicht erkennbare Ablesung ist, wird die Zahl der in Bewegungsrichtung des Skalenbandes nebeneinander angeordneten Lichtleiter in der Regel nicht mehr als fünf betragen.

Vorzugsweise werden mehrere, z.B. drei Lichtleiter, mit ihren Lichteintrittsflächen jeweils in senkrecht zur Bewegungsrichtung des Skalenbandes angeordneten Spalten nebeneinander vorgesehen. Dies hat zwar keinen Einfluß auf die Genauigkeit der Ablesung, erhöht jedoch die Erkennbarkeit der Anzeige aus größerer Entfernung und gibt für viele Anwendungsfälle ein ansprechenderes Aussehen des Anzeigefeldes.

Die vielfältige Anwendungsmöglichkeit der erfindungsgemässen Anzeigevorrichtung soll durch folgende Beispiele illustriert werden, die keinen Anspruch auf Vollständigkeit erheben und nicht als Einschränkung zu sehen sind.

Die Anzeigevorrichtung kann zur Überwachung von Meßgrößen in Kontrollräumen, Schaltwarten und dgl. verwendet werden. Die Anzeigevorrichtung ermöglicht eine auch
aus größerer Entfernung leicht erkennbare und erfaßbare
Anzeige des Istwertes der Meßgröße. Abweichungen des
Istwertes von dem Sollwert werden durch Farbänderung
einzelner Lichtpunkte des Anzeigefeldes sofort erkennbar. Außerdem kann sich das Meßgerät auf Grund der
Lichtleiterverbindung in einem Abstand von dem Anzeigefeld befinden, was aus Platzgründen häufig zweckmäßig
ist.

In Verbindung mit einem Barometer kann die Anzeigevorrichtung in leicht erfaßbarer Weise zwei Informationen
liefern. Die vom Anzeigefeld angezeigte Farbe gibt den
momentanen Luftdruck an, wobei die Farbe eine leicht
faßliche Beziehung zu der entsprechenden Wetterlage
herstellen kann. Das Umschlagen der Farbe einzelner
Leuchtpunkte des Anzeigefeldes zwischen zwei aufeinander folgenden Ablesungen gibt zusätzlich - einen Hinweis auf die steigende oder fallende Tendenz des Luftdruckes.

In Verbindung mit einem Barometer, Thermometer oder
Hygrometer ermöglicht die Anzeigevorrichtung eine
ansprechende Gestaltung dieser Meßinstrumente
insbesondere für den Wohnbereich und dgl.. Das
Meßinstrument kann hinter einem Bild, einem Spiegel oder dgl. angeordnet sein und lediglich das Anzeigefeld mit den Leuchtpunkten ist im Rahmen des Bildes oder Spiegels, im Passepartout oder auch im Feld des Bildes oder Spiegels sichtbar.

Im folgenden wird die Erfindung anhand eines in der Zeichnung dargestellten Ausführungsbeispieles erläutert. Es zeigen

Fig. 1        eine Draufsicht auf die Anzeigevorrichtung
              und

Fig. 2        einen Schnitt der Vorrichtung gem. der
              Linie A-A in Fig. 1.

In dem dargestellten Ausführungsbeispiel ist die Anzeigevorrichtung in Verbindung mit einem herkömmlichen Barometer verwendet.

Auf die Zeigerachse 10 des Barometers 12 ist ein Kunststoffrad 14 mit Speichen 16 aufgesetzt. An dem Rad 14 ist ein als Zylindermantel umlaufendes Skalenband 18 angebracht, das aus aneinander anschließenden, unterschiedlich gefärbten, lichtdurchlässigen Farbfeldern 20 zusammengesetzt ist.

Radial innerhalb des Skalenbandes 18 ist eine Lichtquelle 22 in Form eines Glühlämpchens angeordnet. Der Lichtquelle 22 gegenüber auf der Außenseite des Skalenbandes 18 ist eine Halterung 24 vorgesehen, die mittels Längsschlitzen und Schrauben in Umfangsrichtung des Skalenbandes 18 verschiebbar an einer Grundplatte 26 befestigt ist.

In zwei parallel zu den Farbfeldern 20 angeordneten Stegplatten 28 der Halterung 24 sind die Lichteintrittsenden von Lichtleitern 30 eingesetzt. Es sind neun Lichtleiter vorgesehen, deren dem Skalenband 18 zugewandten Lichteintrittsflächen in einem rechteckigen Feld mit jeweils drei Lichtleitern in Reihen in Drehrichtung des Skalenbandes 18 und in Spalten senkrecht zu dieser Drehrichtung angeordnet sind. Das Feld der Lichteintrittsflächen der Lichtleiter 30 entspricht in seinen Abmessungen den Farbfeldern 20.

Die Lichteintrittsenden der Lichtleiter 30 sind in den Stegplatten 28 so angeordnet, daß sie auf die Lichtquelle 22 gerichtet sind.

Die Lichtleiter 30 führen zu einem Anzeigefeld 32, in welchem die Lichtaustrittsflächen 34 der Lichtleiter 30 ebenfalls in Reihen und Spalten angeordnet sind. Die Anzahl und die Reihenfolge der Spalten und Zeilen der Lichtaustrittsflächen in dem Anzeigefeld 32 entsprechen der Anzahl und der Reihenfolge der Spalten und Zeilen der Lichteintrittsflächen. Der gegenseitige Abstand der Lichtaustrittsflächen 34 ist jedoch größer als der gegenseitige Abstand der Lichteintrittsflächen. Die Zeilen und Spalten der Lichtaustrittsflächen 34 können auch im Winkel verschoben sein, so daß sich anstelle eines rechteckigen Anzeigefeldes 32 beispielsweise ein rautenförmiges Anzeigefeld 32 ergibt, wie dies in der Zeichnung dargestellt ist.

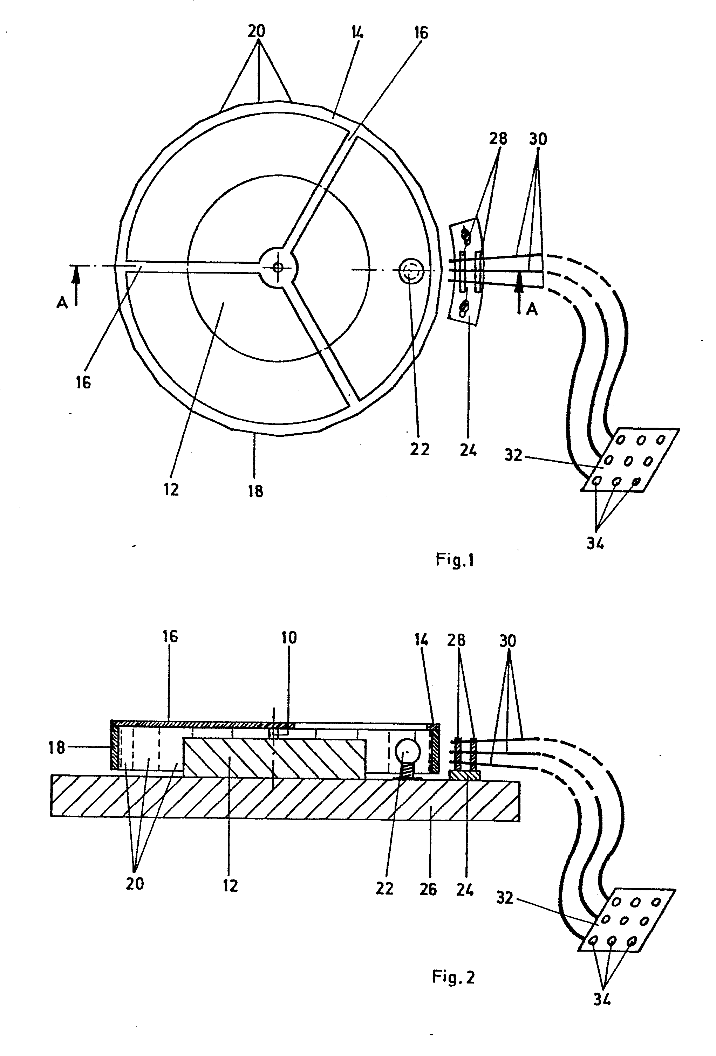

Dreht sich bei einer Änderung der Meßgröße, d.h. bei einer Luftdruckänderung das Skalenband 18 in Fig. 1 im Uhrzeigersinn, so schiebt sich ein neues Farbfeld 20 zwischen die Lichtquelle 22 und die Halterung 28. Dieses neue Farbfeld gelangt zunächst vor die in der Fig. 1 oben liegende erste Spalte der Lichtleiter. Dementsprechend schlägt zunächst die Farbe der obersten waagerechten Zeile der Lichtaustrittsflächen 34 des Anzeigefeldes 32 um. Bei einer weiteren Drehung des Skalenbandes 18 im Uhrzeigersinn wechseln nacheinander von oben nach unten die weiteren Zeilen der Lichtaustrittsflächen 34 die Farbe.

137

Dipl. Ing. **Klaus Westphal**

Dr. rer. nat. **Bernd Mussgnug**

Waldstrasse 33

D-7730 VS-VILLINGEN

Telegr. Westbuch Villingen
Telex 17 77 21217 wemu d
Teletex 7 721217 wemu d

Dr. rer. nat. **Otto Buchner**

**PATENTANWÄLTE**
**European Patent Attorneys**

Flossmannstrasse 30a

D-8000 MÜNCHEN 60

Telefon 089-83 24 46
Telegr. Westbuch München
Telex 5213177 webu d
Telecop. 089-83 44 6 18
(CCITT 3) attention webu

0190447

1065.9 EP

## PATENTANSPRÜCHE

1. Anzeigevorrichtung für ein Meßgerät, das die Meßgröße in den Weg eines bewegten Bandes umwandelt, mit unterschiedlich gefärbten lichtdurchlässigen Farbfeldern, die in dem Band in dessen Bewegungsrichtung aufeinanderfolgend angeordnet sind, mit einer das Band im Bereich der Farbfelder durchstrahlenden Lichtquelle und mit mehreren Lichtleitern, deren Lichteintrittsflächen auf der der Lichtquelle gegenüberliegenden Seite des Bandes nebeneinander angeordnet sind und deren Lichtaustrittsflächen in einem Anzeigefeld angeordnet sind, dadurch gekennzeichnet, daß die Farbfelder (20) in dem als Skalenband (18) ausgebildeten Band in Bewegungsrichtung unmittelbar aneinander anschließen, daß die Lichteintrittsflächen von wenigstens zwei Lichtleitern (30) in Bewegungsrichtung des Skalenbandes (18) nebeneinander angeordnet sind und daß die Lichtaustrittsflächen (34) der Lichtleiter (30) in dem Anzeigefeld (32) in der gleichen gegenseitigen Reihenfolge wie die Lichteintrittsflächen, jedoch mit einem größeren gegenseitigen Abstand, angeordnet sind.

2. Anzeigevorrichtung nach Anspruch 1, dadurch gekennzeichnet, daß die Lichteintrittsflächen der Lichtleiter (30) in einem zu dem Skalenband (18) flächenparallelen Feld angeordnet sind.

3. Anzeigevorrichtung nach Anspruch 2, dadurch gekennzeichnet, daß die Lichteintrittsflächen der Lichtleiter (30) in einem rechteckigen Feld in zueinander senkrechten Spalten und Reihen angeordnet sind.

4. Anzeigevorrichtung nach Anspruch 3, dadurch gekennzeichnet, daß das rechteckige Feld der Lichteintrittsflächen in seinen Abmessungen mit den Farbfeldern (20) übereinstimmt.

5. Anzeigevorrichtung nach einem der vorhergehenden Ansprüche, dadurch gekennzeichnet, daß die Lichtleiter (30) mit ihren Lichteintrittsenden auf die Lichtquelle (22) ausgerichtet sind.

6. Anzeigevorrichtung nach einem der vorhergehenden Ansprüche, dadurch gekennzeichnet, daß die Lichteintrittsenden der Lichtleiter (30) in einer gemeinsamen Halterung (24, 28) befestigt sind.

7. Anzeigevorrichtung nach Anspruch 6, dadurch gekennzeichnet, daß die Halterung (24) in der Bewegungsrichtung des Skalenbandes (18) verstellbar ist.

8. Anzeigevorrichtung nach einem der Ansprüche 2 bis 4, dadurch gekennzeichnet, daß die Lichteintrittsenden der Lichtleiter (30) in dichtester Packung angeordnet sind.

Fig.1

Fig.2